# EUROPÄISCHE PATENTSCHRIFT

(11) **EP 0 938 624 B1**
(45) Veröffentlichungstag und Bekanntmachung des Hinweises auf die Patenterteilung: **02.10.2002**
(21) Anmeldenummer: 98947445.7
(22) Anmeldetag: 21.08.1998
(51) Int. Cl.: F01D 5/08, F01D 25/12, F02K 1/04, F02K 3/04

(54) **TURBOFAN-FLUGTRIEBWERK**
TURBOFAN AIRCRAFT ENGINE
GROUPE MOTOPROPULSEUR A TURBOSOUFFLANTE

(30) Priorität: 12.09.1997 DE 19740228
(43) Veröffentlichungstag der Anmeldung: 01.09.1999
(73) Patentinhaber: Rolls-Royce Deutschland Ltd & Co KG, 15827 Dahlewitz (DE)
(72) Erfinder: NEGULESCU, Dimitrie, D-14163 Berlin (DE); HAARMEYER, Jörg, D-15834 Rangsdorf (DE)
(86) Internationale Anmeldenummer: EP9805326
(87) Internationale Veröffentlichungsnummer: WO99014464

(56) Entgegenhaltungen:
- GB-A- 623 615
- GB-A- 695 482
- US-A- 2 789 416
- US-A- 4 175 640

## Beschreibung

Die Erfindung betrifft Turbofan-Flugtriebwerk mit einem in einer Gondel angeordneten Kerntriebwerk und einem Fan, der einen Kaltluftstrom durch einen Nebenstromkanal zu einem Mischer fördert, innerhalb dessen ein Niederdruckturbinenkonus vorgesehen ist und an welchem der aus der Niederdruckturbine des Kerntriebwerkes austretende Heißgasstrom mit dem Kaltluftstrom vermischt wird, wobei ein Teil des Kaltluftstromes durch Ejektorwirkung abgezweigt wird und als Kühlluftstrom für das Niederdruckturbinengehäuse in einen Ringspalt zwischen diesem und einer dieses umgebenden Verkleidung gelangt, und wobei ein Teil dieses Kühlluftstromes durch hohle Austrittsleitschaufeln eines Nachleitrades der Niederdruckturbine zur Abdichtung des hintersten Ringspaltes zwischen dem Rotor und dem Stator der Niederdruckturbine geführt wird, während der größte Teil des Kühlluftstromes zum Ejektor gelangt.
Zum technischen Umfeld wird beispielshalber auf die DE 33 24 347 C2 sowie auf das Triebwerk BR710 der Anmelderin verwiesen.

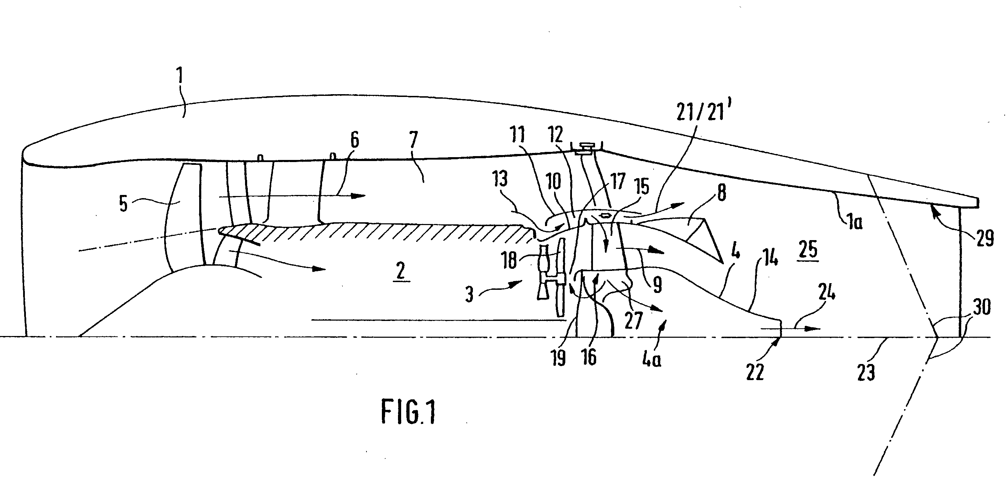

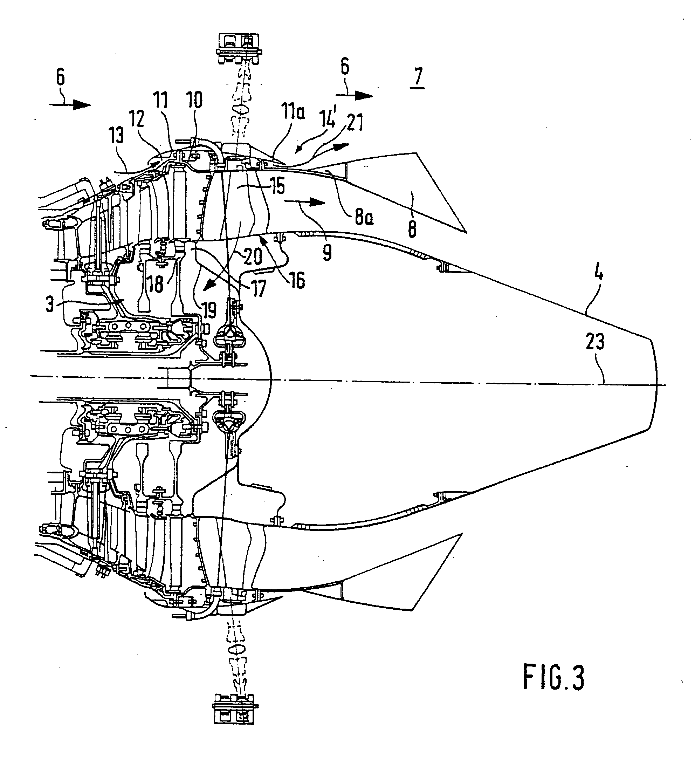

Mit den im Oberbegriff des Anspruchs 1 enthaltenen Merkmalen bzw. mit den dadurch beschriebenen Maßnahmen ist grundsätzlich eine ausreichende Kühlung des Niederdruck-Turbinengehäuses erzielbar. Dabei ist dieser aus dem Flugtriebwerk BR 710 bekannte Stand der Technik in der beigefügten Fig. 3 dargestellt und wird im folgenden kurz erläutert. Hinsichtlich der Gesamtanordnung im Flugtriebwerk wird dabei teilweise auch auf Fig. 1 Bezug genommen, welche jedoch ansonsten die erfindungsgemäße Gestaltung zeigt. Dargestellt ist dabei stets ein Längsschnitt bzw. ein Teil-Längsschnitt durch das Turbofan-Flugtriebwerk.

In Fig. 1 ist mit der Bezugsziffer 1 die Gondel eines Turbofan-Flugtriebwerkes bezeichnet, innerhalb derer konzentrisch das sog. Kerntriebwerk 2 angeordnet ist. Im stromabwärtigen Endbereich des Kerntriebwerkes 2 befindet sich wie üblich die Niederdruckturbine 3, an welche sich ein Niederdruckturbinenkonus 4 anschließt, während stromauf des Kerntriebwerkes 2 ein Fan 5 vorgesehen ist. Dieser Fan 5 wird von der nicht näher bezeichneten Turbinenwelle des Flugtriebwerkes angetrieben und fördert einen Kaltluftstrom 6 durch einen zwischen der Gondel 1 und dem Kerntriebwerk 2 liegenden Nebenstromkanal 7.
Zwischen den Niederdruckturbinenkonus 4 sowie der Innenwand der Gondel 1 ist konzentrisch ein ringförmiger Mischer 8 vorgesehen, der beispielsweise als Blütenmischer ausgebildet sein kann, und an bzw. in welchem der aus der Niederdruckturbine 3 austretende Heißgasstrom 9 mit dem Kaltluftstrom 6 vermischt wird.

In Fig. 1 ist weiterhin als bekannter Stand der Technik das Niederdruckturbinengehäuse mit der Bezugsziffer 10 bezeichnet. Umgeben wird dieses Niederdruckgehäuse 10 von einer Verkleidung 11 der Niederdruckturbine 3, wobei sich zwischen der Verkleidung 11 sowie dem Niederdruckturbinengehäuse 10 ein Ringspalt 12 befindet.
Durch diesen Ringspalt 12 wird ein Kühlluftstrom 13 geführt, der vom Kaltluftstrom 6 abgezweigt wird, und der insbesondere der Kühlung des Niederdruck-Turbinengehäuses 10 dient.

Wie Fig. 3 als bekannten Stand der Technik zeigt, wird dieser Kühlluftstrom 13 durch Ejektorwirkung gefördert, d. h. vom Kaltluftstrom 6 durch Ejektorwirkung abgezweigt. Hierzu ist im bekannten Stand der Technik der stromabwärtige Endbereich 11a der Verkleidung 11 düsenartig ausgebildet, d. h. in diesem Endbereich 11a bildet die Verkleidung 11 zusammen mit dem Mischereinlauf 8a einen als Ejektor 14' wirkenden Düsenringspalt. Mittels dieses Ejektors 14' wird somit der Kühlluftstrom 13 vom zwischen der Gondelinnenwand 1a und dem Mischer 8 strömenden Kaltluftstrom 6 mitgerissen.

Zusätzlich wird - um den sog. Heißgaseinsturz (dieses Schlagwort beschreibt die Tatsache, daß Heißgas aus dem Turbinenringraum von den Schaufeln zur Turbinenwelle gelangt) zu verhindern - im bekannten Stand der Technik ein Bruchteil des Kühlluftstromes 13 durch die hohl ausgebildeten Austrittsleitschaufeln 15 des in seiner Gesamtheit mit 16 bezeichneten Niederdruckturbinennachleitrades des Kerntriebwerkes 2 zur Abdichtung des hintersten Ringspaltes 17 zwischen dem Rotor 18 und dem Stator 19 der Niederdruckturbine 3 geführt. Die dementsprechende Kühlluftströmung eines Bruchteils des Kühluftstromes 13 ist durch den Pfeil 20 dargestellt.
Ausgehend von 100 % Kühlluft, die als Kühlluftstrom 13 in den Ringspalt 12 eintritt, gelangen beispielsweise 5 % gemäß Pfeil 20 zum Ringspalt 17, während die restlichen 95 % des bekannten Standes der Technik durch den Ejektor 14' gemäß Pfeil 21 abgeführt werden.

Grundsätzlich ist diese beschriebene Lösung zur Kühlung des Niederdruck-Turbinengehäuses 10 überzeugend, jedoch treten bei der Wiedereinleitung des Kühlluftstroms gemäß Pfeil 21 in den Nebenstromkanal 7 Strömunsverluste auf, durch welche der spezifische Triebwerksverbrauch erhöht werden kann. Ferner kann es für gewisse Anwendungsfälle gewünscht sein, eine noch stärkere Kühlung von Komponenten der Niederdruckturbine 3 zu erzielen.

Eine gegenüber dem bekannten Stand der Technik verbesserte Führung des Kühlluftstromes an einem Turbofan-Flugtriebwerk nach dem Oberbegriff des Anspruchs 1 aufzuzeigen, ist daher Aufgabe der vorliegenden Erfindung.

Die Lösung dieser Aufgabe ist dadurch gekennzeichnet, daß der größte Teil des Kühlluftstromes durch die hohlen Austrittsleitschaufeln in den Innenraum des an seinem stromabwärtigen freien Endabschnitt eine düsenartige Austrittsöffnung aufweisenden Niederdruckturbinenkonus gelangt, so daß dieser stromabwärtiger Endabschnitt als Ejektor wirkt, über welchen der Kühlluftstrom dem aus dem Mischer austretendem Luftstrom beigemengt wird.
Vorteilhafte Aus- und Weiterbildungen sind Inhalt der Unteransprüche.

Näher erläutert wird die Erfindung anhand eines bevorzugten Ausführungsbeispieles, wobei in der bereits eingangs erwähnten Fig. 1 in einem Längs-Halbschnitt ein erfindungsgemäßes Turbofan-Flugtriebwerk stark vereinfacht dargestellt ist, während Fig. 2 das stromabwärtige Ende der Niederdruckturbine mit sich daran anschließendem erfindungsgemäß gestaltetem Niederdruckturbinenkonus (analog der Darstellung des bekannten Standes der Technik dem des Turbofan-Flugtriebwerks BR710 nach Fig. 3) im Schnitt zeigt.
Für die bereits bei der Darlegung des bekannten Standes der Technik erläuterten Bauteile oder Luftströme werden hier die gleichen Bezugsziffern verwendet.

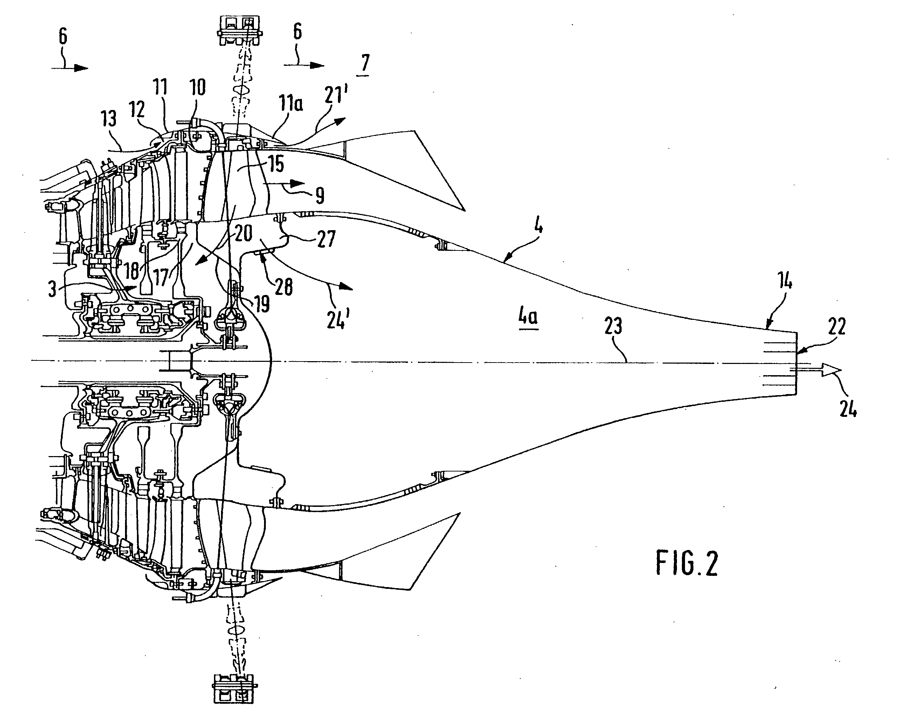

Wie ein einfacher Vergleich der Fig. 2 und 3 zeigt, weist der erfindungsgemäße Niederdruckturbinenkonus 4 an seinem stromabwärtigen freien Endabschnitt eine düsenartige Austrittsöffnung 22 auf, die hier zur Verdeutlichung geringfügig perspektivisch dargestellt ist. Über diese bezüglich der zentralen Längsachse 23 des Flugtriebwerkes zentral liegende Austrittsöffnung kann gemäß Pfeilrichtung 24 ein Luftstrom aus dem Innenraum 4a des wie üblich hohl ausgebildeten Niederdruckturbinenkonus 4 abgezogen werden, da dieser stromabwärtige freie Endabschnitt des Niederdruckturbinenkonus 4 zusammen mit der im Ringraum zwischen seiner Oberfläche und der Gondelinnenwand 1 geführten Luftströmung einen bzw. den Ejektor 14 bildet. Dies wird auch aus Fig. 1 ersichtlich, worin der besagte Ringraum zwischen der Oberfläche des Niederdruckturbinenkonus 4 und der Gondelinnenwand 1a mit der Bezugsziffer 25 bezeichnet ist. In Richtung der zentralen Längsachse 23 sowie in Richtung des Pfeiles 24 strömt durch diesen Ringraum 25 der zuvor im Mischer 8 mit dem Kaltluftstrom 6 vermischte Heißgasstrom 9.

Um dabei mit dem Niederdruckturbinenkonus 4 einen optimalen Ejektor 14 zu gestalten, ist der stromabwärtige freie Endabschnitt des Niederdruckturbinenkonus 4 selbstverständlich geometrisch geeignet und insbesondere auch abweichend vom bekannten Stand der Technik gemäß Fig. 3 geformt.

Erfindungsgemäß gelangt nun der größte Teil des Kühlluftstromes 13 in den Innenraum 4a des Niederdruckturbinenkonus 4, so daß der am stromabwärtigen Endabschnitt des Niederdruckkonus 4 vorgesehene Ejektor 14 diesen Kühlluftstrom 13 wie gewünscht fördert, d. h. insbesondere vom Kaltluftstrom 6 abzweigt.

Im Eintrittsbereich des Ringspaltes 12 zwischen dem Niederdruck-Turbinengehäuse 10 und der Verkleidung 11 liegen bei der erfindungsgemäßen Gestaltung nach Fig. 2 somit dieselben geometrischen Verhältnisse vor, wie beim bekannten Stand der Technik nach Fig. 3. Insbesondere gelangen 100 % des vom Kaltluftstrom 6 abgezweigten Kühlluftstromes 13 in den Ringspalt 12 und werden somit entlang der Außenseite des Niederdruck-Turbinengehäuses 10 geführt, wodurch dieses optimal gekühlt werden kann.
Abweichend vom bekannten Stand der Technik kann nun bevorzugt - und dies ist beim erläuterten Ausführungsbeispiel nach Fig. 2 der Fall - der Ringspalt 12 im stromabwärtigen Endbereich 11a der Verkleidung 11 (d.h. der beim vorbekannten Stand der Technik nach Fig. 3 mit der Bezugsziffer 14 bezeichnete Ejektor) zumindest teilweise abgedichtet sein. Dies hat zur Folge, daß lediglich ein Bruchteil des Kühlluftstromes 13 gemäß Pfeil 21' wieder in den Nebenstromkanal 7 austritt. Der Großteil des Kühlluftstromes 13 hingegen wird nun durch die hohle Austrittsleitschaufel 15 in einen unter dieser liegenden ringförmigen Hohlraum 27 geleitet, und zwar unter Wirkung des Ejektors 14. In diesem ringförmigen Hohlraum 27 wird der aus dem nicht dargestellten und nicht näher bezeichneten Hohlraum der Austrittsleitschaufel 15 austretende Kühlluftstrom aufgeteilt und zwar gemäß Pfeil 20 in einem Bruchteil, der analog dem bekannten Stand der Technik zum Ringspalt 17 gelangt, sowie in einen demgegenüber wesentlich größeren Teil, der gemäß Pfeil 24' in den Innenraum 4a des Niederdruckturbinenkonus 4 gelangt. Betragsmäßig ist der Luftstrom 24' dabei gleich dem durch den Ejektor 14 geförderten Luftstrom 24.

Die Auslegung der einzelnen den Kühlluftstrom 13 sowie die Luftströmungen gemäß den Pfeilen 20, 21', 24' bzw. 24 beeinflussenden Durchtrittsöffnungen, Spalte oder dgl. kann dabei derart vorgesehen sein, daß von 100 % Kühlluftstrom 13 abermals 5 % gemäß Pfeil 20 zum Ringspalt 17 geleitet werden, während 90 % gemäß den Pfeilen 24' und 24 durch den Ejektor 14, der wie bereits erläutert die eigentliche treibende Kraft für diesen Kühlluftstrom 13 ist, austreten. Die verbleibenden 5 % treten dabei gemäß Pfeil 21' über den Endabschnitt des Ringspaltes 12 im stromabwärtigen Endbereich 11a der Verkleidung 11 in den Nebenstromkanal 7 aus.

Die hier beschriebene Kühlluftführung, bei welcher der Ejektor 14 am stromabwärtigen freien Endabschnitt des Niederdruckturbinenkonus 4 vorgesehen ist, hat somit den Vorteil, daß eine größere Menge von Kühlluft durch die Austrittsleitschaufel 15 gelangt, womit sich eine verbesserte Kühlung der Niederdruck-Turbinenkomponenten einstellt. Ferner werden auf diese Weise Strömungsverluste im Nebenstromkanal 7, die beim bekannten Stand der Technik durch den dort vorgesehenen Ejektor 14 hervorgerufen werden, vermieden.

Wie bereits erläutert ist der Ringspalt 12 zwischen dem Niederdruck-Turbinengehäuse 10 und der dieses umgebenden Verkleidung 11 an seinem stromabwärtigen Ende, d. h. im Endbereich 11a der Verkleidung 11 zumindest teilweise abgedichtet, so daß nurmehr der gegenüber dem Luftstrom 21 nach Fig.3 wesentlich verringerte Luftstrom gemäß Pfeil 21' über den Endabschnitt des Ringspaltes 12 in den Nebenstromkanal 7 austreten kann. Wie ebenfalls bereits erläutert liegt die nicht näher dargestellte Abdichtung des stromabwärtigen Endes des Ringspaltes 12 dabei im Bereich des Mischereinlaufes 8a.

Um es dem durch die hohle Austrittsleitschaufel 15 in den ringförmigen Hohlraum 27 gelangenden Kühlluftstrom zu ermöglichen, in den Innenraum 4a des Niederdruckturbinenkonus 4 einzutreten, weist dieser Niederdruckturbinenkonus 4 in seinem stromaufwärtigen Endabschnitt, d. h. im Bereich dieses ringförmigen Hohlraums 27 umfangsseitig mehrere Luftübertrittsöffnungen 28 auf. Dabei sind diese Luftübertrittsöffnungen 28 ebenso wie die gesamte Kühlluftstrompassage vom Einlauf aus dem Nebenstromkanal 7 durch die hohlen Austrittsleitschaufeln 15 bis hin zur düsenartigen Austrittsöffnung 22 unter strömungstechnischen Aspekten optimiert.

Ebenso ist im Hinblick auf seine Funktion als Ejektor 14 der stromabwärtige Endabschnitt des Niederdruckturbinenkonus 4 strömungsdynamisch optimiert. Bezogen auf die Gondel 1 bzw. auf die sich an die Gondel 1 anschließende Triebwerksdüse 29 (vgl. Fig.1) liegt die düsenartige Austrittsöffnung 22 des Ejektors 14, d. h. der stromabwärtige Endabschnitt des Niederdruckturbinenkonus 4 dabei im Inneren dieser Triebwerksdüse 29, ist koaxial hierzu angeordnet und kommt in Längsrichtung des Flugtriebwerkes betrachtet in etwa in der Mitte zwischen der Austrittsebene des Mischers 8 und dem Achsenschnitt der ausgezogenen Klappen des Schubumkehrers, welche Bestandteil der Triebwerksdüse 29 sind, zum Liegen. Dieser Achsenschnitt der ausgezogenen Klappen des Schubumkehrers ist dabei in Fig. 1 symbolisch durch die beiden mit der Bezugsziffer 30 bezeichneten strichpunktierten Linien dargestellt.

Jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

### Bezugszeichenliste:

- 1: Gondel
- 1a: Gondelinnenwand
- 2: Kerntriebwerk

- 3: Niederdruckturbine
- 4: Niederdruckturbinenkonus
- 4a: Innenraum von 4

- 5: Fan
- 6: Kaltluftstrom
- 7: Nebenstromkanal

- 8: Mischer
- 8a: Mischereinlauf
- 9: Heissgasstrom

- 10: Niederdruckturbinengehäuse
- 11: Verkleidung von 3, umgibt 10
- 11a: stromabwärtiger Endbereich von 11
- 12: Ringspalt zwischen 10 und 11

- 13: Kühlluftstrom
- 14: Ejektor am Niederdruckturbinenkonus
- 14': Ejektor am stromabwärtigen Endbereich der Verkleidung der Niederdruckturbine
- 15: Austrittsleitschaufel
- 16: Niederdruckturbinen-Nachleitrad

- 17: Ringspalt zwischen 18 und 19
- 18: Rotor
- 19: Stator

- 20: Pfeil: Kühlluftströmung eines Bruchteils von 13 in Richtung 17
- 21: Pfeil: Kühlluftstrom 13 um den Bruchteil gemäß 20 reduziert
- 21': Pfeil: Kühlluftstrom in Fig.2 bei 11a aus 12 austretend

- 22: düsenartige Austrittsöffnung in 4
- 23: zentrale Längsachse

- 24: Pfeil: Luftstrom durch 22
- 24': Pfeil: Kühlluftstrom in 4a gelangend

- 25: Ringraum zwischen 4 und 1 a
- 27: ringförmiger Hohlraum unterhalb bzw. innerhalb von 15

- 28: Luftübertrittsöffnungen in 4
- 29: Triebwerksdüse
- 30: Achsenschnitt der ausgezogenen Klappen des Schubumkehrers

## Patentansprüche

1. Turbofan-Flugtriebwerk mit einem in einer Gondel (1) angeordneten Kerntriebwerk (2) und einem Fan (5), der einen Kaltluftstrom (6) durch einen Nebenstromkanal (7) zu einem Mischer (8) fördert, innerhalb dessen ein Niederdruckturbinenkonus (4) vorgesehen ist und an welchem der aus der Niederdruckturbine (3) des Kerntriebwerkes (2) austretende Heißgasstrom (9) mit dem Kaltluftstrom (6) vermischt wird, wobei ein Teil des Kaltluftstromes (6) durch Ejektorwirkung abgezweigt wird und als Kühlluftstrom (13) für das Niederdruckturbinengehäuse (10) in einen Ringspalt (12) zwischen diesem und einer dieses umgebenden Verkleidung (11) gelangt, und wobei ein Teil dieses Kühlluftstromes (13) durch hohle Austrittsleitschaufeln (15) eines Nachleitrades (16) der Niederdruckturbine (3) zur Abdichtung des hintersten Ringspaltes (17) zwischen dem Rotor (18) und dem Stator (19) der Niederdruckturbine (3) geführt wird,
**dadurch gekennzeichnet, daß** der größte Teil des Kühlluftstromes (13) durch die hohlen Austrittsleitschaufeln (15) in den Innenraum (4a) des an seinem stromabwärtigen freien Endabschnitt eine düsenartige Austrittsöffnung (22) aufweisenden Niederdruckturbinenkonus (4) gelangt, so daß dieser stromabwärtige Endabschnitt als Ejektor (14) wirkt, über welchen der Kühlluftstrom (13 bzw. 24) dem aus dem Mischer (8) austretendem Luftstrom beigemengt wird.

2. Turbofan-Flugtriebwerk nach Anspruch 1,
**dadurch gekennzeichnet, daß** der Niederdruckturbinenkonus (4) an seinem stromaufwärtigen Endabschnitt umfangsseitig Luftübertritttsöffnungen (28) für den in den Innenraum (4a) des Niederfruckturbinenkonus (4) eintretenden Kühlluftstrom (13 bzw. 24') aufweist.

3. Turbofan-Flugtriebwerk nach Anspruch 1 oder 2,
**dadurch gekennzeichnet, daß** der Ringspalt (12) zwischen dem Niederdruckturbinengehäuse (10) und der dieses umgebenden Verkleidung (11) an seinem stromabwärtigen Ende zumindest teilweise abgedichtet ist.

4. Turbofan-Flugtriebwerk nach einem der vorangegangenen Ansprüche,
**dadurch gekennzeichnet, daß** der Ejektor (14) koaxial innerhalb der Triebwerksdüse (29) in etwa zwischen der Austrittsebene des Mischers (8) und dem Achsenschnitt (30) der ausgezogenen Klappen des Schubumkehrers liegt.

## Claims

1. Turbofan aero-engine with a core engine (2) installed in a nacelle (1) and with a fan (5) delivering a cold-air stream (6) through a bypass duct (7) to a mixer (8) in which a low-pressure turbine exhaust cone (4) is provided and at which the hot-gas stream (9) exiting from the low-pressure turbine (3) of the core engine (2) is mixed with the cold-air stream (6), with a part of the cold-air stream (6) being branched off by ejector action and flowing ― as cooling-air stream (13) for the low-pressure turbine casing (10) - in an annular gap (12) between this low-pressure turbine casing (10) and a fairing (11) surrounding the latter, and with a part of this cooling air stream (13) being passed through hollow exit guide vanes (15) of an exit guide vane assembly (16) of the low-pressure turbine (3) for the purpose of sealing of the rearmost annular gap (17) between the rotor (18) and the stator (19) of the low-pressure turbine (3),
**characterized in that** the major portion of the cooling-air stream (13) passes through the hollow exit guide vanes (15) into the interior (4a) of the low-pressure turbine exhaust cone (4) featuring a nozzle-type exit opening (22) at its downstream free end section, this downstream end section operating as ejector (14) by which the cooling-air stream (13 or 24, respectively) is added to the air stream exiting from the mixer (8).

2. Turbofan aero-engine of Claim 1,
**characterized in that** the low-pressure turbine exhaust cone (4) has air transition ports (28) circumferentially arranged at its upstream end section enabling the cooling-air stream (13 or 24', respectively) to enter the interior (4a) of the low-pressure turbine exhaust cone (4).

3. Turbofan aero-engine of Claim 1 or 2,
**characterized in that** the annular gap (12) between the low-pressure turbine casing (10) and the fairing (11) surrounding the latter is at least partly sealed at its downstream end.

4. Turbofan aero-engine of one of the preceding Claims,
**characterized in that** the ejector (14) is arranged co-axially within the engine nozzle (29) approximately between the exit plane of the mixer (8) and the axis intersection (30) of the deployed flaps of the thrust reverser.

## Revendications

1. Groupe motopropulseur d'un turboréacteur à double flux avec une turbine nucléaire (2) placée dans une nacelle (1) et avec un ventilateur (5) qui transporte un flux d'air froid (6) par un canal de flux latéral (7) jusqu'à un mélangeur (8) à l'intérieur duquel on a prévu un cône de turbine à basse pression (4) et sur lequel le flux de gaz chaud (9) provenant de la turbine à basse pression (3) de la turbine nucléaire (2) est mélangé avec le flux d'air froid (6), pour lequel une partie du flux d'air froid (6) est séparée par l'effet de l'éjecteur et parvient en tant que flux d'air de refroidissement (13) pour le logement de la turbine à basse pression (10) dans une fente annulaire (12) entre celui-ci et un revêtement (11) entourant celui-ci, alors qu'une partie de ce flux d'air de refroidissement (13) est guidée vers la turbine à basse pression (3) par des aubes directrices de sortie (15) creuses d'un distributeur postérieur (16) de la turbine à basse pression (3) pour étancher la fente annulaire (17) arrière entre le rotor (18) et le stator (19),
**caractérisé en ce que**
la plus grande partie du flux d'air de refroidissement (13) parvient par les aubes directrices de sortie (15) creuses dans l'espace intérieur (4a) du cône de turbine à basse pression (4) présentant sur son segment terminal libre en aval du flux une ouverture de sortie (22) en forme de tuyère, de sorte que ce segment terminal en aval du flux agit en tant qu'éjecteur (14) au moyen duquel le flux d'air de refroidissement (13 ou 24) est mélangé au flux d'air qui sort du mélangeur (8).

2. Groupe motopropulseur d'un turboréacteur à double flux selon la revendication 1,
**caractérisé en ce que**
sur son segment terminal en aval du flux le cône de turbine à basse pression (4) présente des ouvertures de sortie d'air (28) périphériques pour le flux d'air de refroidissement (13 ou 24') qui entre dans l'espace intérieur (4a) du cône de turbine à basse pression (4).

3. Groupe motopropulseur d'un turboréacteur à double flux selon la revendication 1 ou 2,
**caractérisé en ce que**
la fente annulaire (12) entre le logement de la turbine à basse pression (10) et le revêtement (11) entourant celui-ci est étanche au moins partiellement sur son extrémité en aval du flux.

4. Groupe motopropulseur d'un turboréacteur à double flux selon l'une des revendications précédentes,
**caractérisé en ce que**
l'éjecteur (14) se trouve coaxialement à l'intérieur de la tuyère de turbine (29) à peu près entre le plan de sortie du mélangeur (8) et la section méridienne (30) des trappes sorties du convecteur de poussée.
